# EUROPÄISCHE PATENTSCHRIFT

(11) **EP 0 819 591 B1**
(45) Veröffentlichungstag und Bekanntmachung des Hinweises auf die Patenterteilung: **08.09.2004**
(21) Anmeldenummer: 97111217.2
(22) Anmeldetag: 03.07.1997
(51) Int. Cl.: B60T 8/60

(54) **Verfahren zur Durchführung eines automatischen Bremsvorgangs**
Process for accomplishing an automatic brake operation
Procédé pour accomplir une opération de freinage automatique

(30) Priorität: 20.07.1996 DE 19629229
(43) Veröffentlichungstag der Anmeldung: 21.01.1998
(60) Teilanmeldung: 04004606.2
(73) Patentinhaber: DaimlerChrysler AG, 70567 Stuttgart (DE)
(72) Erfinder: Clauss, Johannes, 74321 Bietigheim-Bissingen (DE); Klinkner, Walter, 70619 Stuttgart (DE); Knoff, Bernd, 73734 Esslingen (DE); Steiner, Manfred, 71364 Winnenden (DE)

(56) Entgegenhaltungen:
- DE-C- 4 325 940
- DE-C- 4 338 070
- DE-C- 4 413 172
- SAUER H.: 'Technik: Diwalock-Bremsunterstützung' AUTO MOTOR UND SPORT Bd. 1996, Nr. 12, 31 Mai 1996, STUTTGART, Seiten 40 - 41

## Beschreibung

Die Erfindung betrifft Verfahren zur Durchführung eines Bremsvorgangs nach dem Oberbegriff der unabhängigen Ansprüche.
Ein gattungsgemäß zugrundegelegtes Verfahren ist aus der Zeitschrift "Auto Motor und Sport", Verlag Motorsportpresse Stuttgart, Heft 12/1996 vom 31. Mai 1996, Seite 40 bekannt.

Gemäß dem gattungsgemäß zugrundegelegten Verfahren wird dann, wenn die Rücknahmegeschwindigkeit des Gaspedals einen Schwellenwert überschreitet und ein Umsetzen des Fußes des Fahrers vom Gaspedal auf das Bremspedal festgestellt wird, ein automatischer Bremsvorgang ausgelöst, während dessen in den Radbremsen ein Bremsdruck erzeugt wird. Gemäß diesem Verfahren wird der automatische Bremsvorgang dann beendet, wenn entweder eine bestimmte Zeit seit dem Auslösen des Bremsvorgangs überschritten wird oder wenn eine Betätigung des Bremspedal durch den Fahrer erfolgt.

Des weiteren ist aus der DE 44 13 172 C 1 ein Verfahren zur Durchführung eines automatischen Bremsvorgangs bekannt, bei dessen Durchführung ein Bremsdruck erzeugt wird, der größer ist, als es der Stellung des Bremspedals entspricht. Die Auslösung des automatischen Bremsvorgangs erfolgt dann, wenn die Betätigungsgeschwindigkeit des Bremspedals einen Schwellenwert überschreitet. Der Schwellenwert wird dabei in Abhängigkeit der Abfolge von Pedalbetätigungen sowie der Art und Weise ihrer Durchführung an die aktuelle Fahrsituation angepaßt. Ein automatischer Bremsvorgang wie er in der DE 44 13 172 C1 beschrieben wird, kann beispielsweise durch ein Abbruchkriterium entsprechend der DE 43 38 070 C1 beendet werden. Weitere Kriterien zum Beenden eines automatischen Bremsvorgangs sind in der DE 43 25 940 C1 beschreiben.

Das gattungsgemäß zugrundegelegten Verfahren ist zwar in der Lage frühzeitig - schon vor der Betätigung des Bremspedals - einen automatischen Bremsvorgang einzuleiten. Es ist aber nicht dazu in der Lage in einer kritischen Fahrsituation den Aufbau eines Bremsdrucks während der Betätigung des Bremspedals durch den Fahrer zu unterstützen.

Andererseits ist ein Verfahren nach der DE 44 13 172 C1 nicht dazu in der Lage, eine Gefahrensituation schon vor der Betätigung des Bremspedals durch den Fahrer zu erkennen. Somit wird gegenüber dem gattungsgemäß zugrundegelgten Verfahren Zeit für den Bremsdruckaufbau verloren.

Aufgabe der Erfindung ist es daher, ein Verfahren zu schaffen, das sowohl dazu in der Lage ist, eine Unterstützung des Fahrers bei der Betätigung des Bremspedals in kritischen Fahrsituationen zu gewährleisten und das andererseits dazu in der Lage ist, einen Bremsdruckaufbau schon vor der Betätigung des Bremspedals durch den Fahrer vorzunehmen oder soweit vorzubereiten, daß mit der Bremsbetätigung durch den Fahrer in kritischen Fahrsituationen ein beschleunigter Bremsdruckaufbau erzielt wird.

Diese Aufgabe wird, bei Zugrundelegen der gattungsgemäßen Verfahrensschritte erfindungsgemäß durch die kennzeichnenden Merkmale der unabhängigen Ansprüche 1 und 2 gelöst.

Nachdem ein automatischer Bremsvorgang ausgelöst wird, wird gemäß den unabhängigen Ansprüchen 1 und 2 überwacht, ob die Zeitableitung einer die Betätigung des Bremspedals repräsentierenden Größe einen Anstiegsschwellenwert überschreitet. Das Überschreiten des Anstiegsschwellenwertes muß dabei innerhalb eines bestimmten Zeitraums nach dem Auslösen des automatischen Bremsvorgangs erfolgen. Gemäß dem Anspruch 2 ist es zusätzlich erforderlich, daß das Überschreiten des Anstiegsschwellenwertes auch innerhalb eines bestimmten Zeitraums nach dem Schalten des Bremslichtschalters aus seiner unbetätigten Schaltstellung (Bremsleuchten aus, BLS = 0) in seine betätigte Schaltstellung (Bremsleuchten ein, BLS = 1) erfolgt.

In vorteilhafter Weise wird dadurch sicher festgestellt, ob tatsächlich eine kritische Fahrsituation gegeben ist. Wird dies erkannt, so wird der automatische Bremsvorgang fortgesetzt.

In einer Ausgestaltung gemäß dem Anspruch 3 bedarf es neben der rechtzeitigen Betätigung des Bremspedals auch zusätzlich einem Anstieg der Betätigungskraft des Bremspedals über einen Betätigungskraftschwellenwert hinaus um den automatischen Bremsvorgang fortzusetzen. Hierbei ist es gemäß den Ausgestaltungen der Ansprüche 8 oder 11 von besonderem Vorteil, wenn der Bremsdruck in den Radbremsen begrenzt wird, damit die vor Betätigung der Bremse erzielte Bremswirkung gering bleibt. Im Falle von kritischen Fahrsituationen wird dabei immer noch eine Verkürzung des benötigten Bremswegs erreicht, da es möglich ist, das Lüftspiel der Radbremszylinder auch ohne Erzeugen einer Bremswirkung zu überwinden und gemäß einer der Ausgestaltung der Erfindung eine weitere Erhöhung des Bremsdrucks durch den Aufbau von Bremsdruck in den Hauptbremsleitungen erzeugt werden kann.

Gemäß den Ausgestaltungen der Erfindung nach den Unteransprüchen 3, 4 und 15 wird als die Betätigung des Bremspedals repräsentierende Größe der Pedalweg, die Pedalbetätigungsgeschwindigkeit, die Betätigungskraft oder der Bremsdruck in den Hauptbremsleitungen herangezogen.

Weitere Ausgestaltungen der Erfindung betreffen die Bestimmung des zweiten Zeitschwellenwertes, der die Zeit nach dem Schalten des Bremslichtschalters betrifft und die Bestimmung des Anstiegsschwellenwertes.

Die Ausgestaltungen der Ansprüche 7 bis 12 betreffen den in den Radbremsen zu erzeugenden Bremsdruck nach dem Auslösen des automatischen Bremsvorgangs, wobei dieser Bremsdruck sowohl auf ein Bestimmtes Maß begrenzt als auch so geregelt sein kann, daß die Fahrzeugverzögerung ein bestimmtes Maß nicht überschreitet. Diese Ausgestaltungen haben den Vorteil, daß sie die Verzögerung des Fahrzeugs vor dem Betätigen des Bremspedals durch den Fahrer begrenzen und daher ein unangenehmes Rucken des Fahrzeugs bei einem Abbruch des automatischen Bremsvorganges vermieden. Ferner wird das Verhalten des Fahrzeugs für den nachfolgenden Fahrer besser einschätzbar.

Die Ausgestaltungen der Ansprüche 13 und 14 betreffen vorteilhafte Ausgestaltungen des automatischen Bremsvorgangs nachdem der Anstiegsschwellenwert überschritten worden ist. Demnach wird dann in den Radbremsen ein Bremsdruck erzeugt, der größer ist als der Bremsdruck, der der Stellung des Bremspedals entspricht. Insbesondere kann ein solcher Bremsdruck erzeugt werden, daß an wenigstens einem Teil der Räder eine Regelung des Bremsdrucks durch ein Antiblockiersystem erfolgt.

Weitere vorteilhafte Ausgestaltungen können auch den Unteransprüchen entnommen werden. Im übrigen ist die Erfindung an Hand der in der Zeichnung dargestellten Ausführungsbeispiele nachfolgend erläutert; dabei zeigen:
- Fig. 1: eine schematische Darstellung einer Anordnung zur Durchführung erfindungsgemäßer Verfahren;
- .Fig. 2: das Flußdiagramm eines ersten erfindungsgemäßen Verfahrens;
- Fig. 3: das Flußdiagramm eines zweiten erfindungsgemäßen Verfahrens;

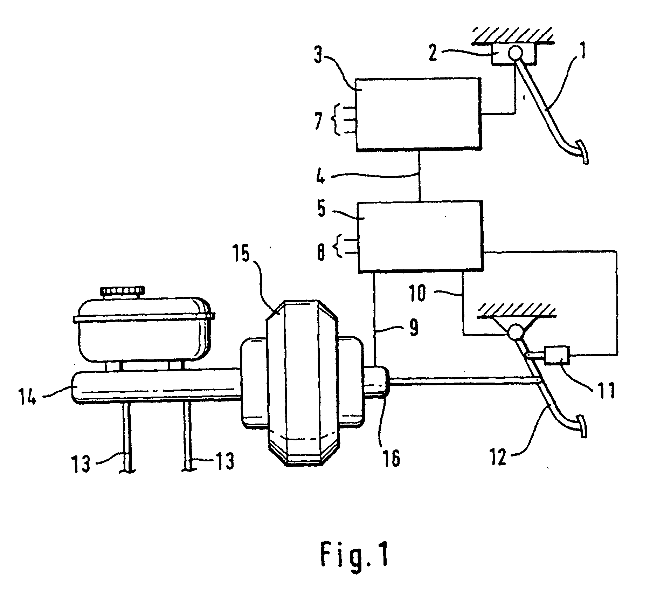

Die Fig. 1 zeigt die schematische Darstellung einer Anordnung zur Durchführung erfindungsgemäßer Verfahren. Die Stellung des Gaspedals 1 wird durch den Pedalwegsensor 2 erfaßt und an die Gassteuereinrichtung 3 weitergeleitet. In dieser Gassteuereinrichtung kann aus der erfaßten Stellung des Gaspedals die Gaspedalrücknahmegeschwindigkeit vg ermittelt werden. Die Gassteuereinrichtung 3 ist über die Datenleitung 4 mit der Steuereinrichtung 5 für den automatischen Bremsvorgang verbunden. Beide Steuereinrichtungen können über weitere Datenleitungen 7 bzw. 8 mit weiteren Sensoren, Stelleinrichtungen (beispielsweise den Bremsdrucksteuerventilen des Antiblockiersystems) und Steuergeräten verbunden sein. Der Steuereinrichtung 5 wird über die Leitung 10 ferner ein Signal des Pedalwegs des Bremspedals 12 zugeführt. Der Bremslichtschalter 11 schaltet einerseits die Bremsleuchten (nicht zeichnerisch dargestellt), sein Signal wird jedoch auch der Steuereinrichtung 5 zugeführt. Die Steuereinrichtung steuert über die Steuerleitung 9 das Schaltventil 16 des Bremskraftverstärkers 15 an. Dadurch kann die Druckdifferenz zwischen den Kammern des Bremskraftverstärkers verändert werden. Somit kann einerseits unabhängig von der Betätigung des Bremspedals 12 ein Bremsdruck und andererseits ein Bremsdruck, der größer ist, als der der Stellung des Bremspedals entsprechende Bremsdruck durch den Hauptbremszylinder 14 in den Hauptbremsleitungen 13 erzeugt werden.

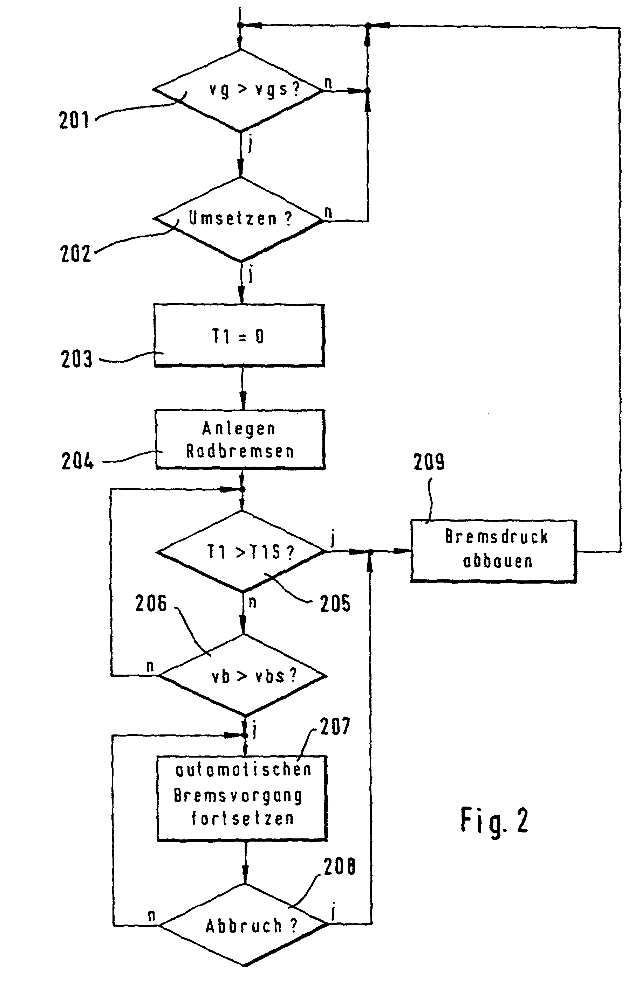

Die Fig. 2 zeigt das Flußdiagramm eines ersten erfindungsgemäßen Verfahrens. Im Schritt 201 wird überprüft, ob die Gaspedalrücknahmegeschwindigkeit vg einen Schwellenwert vgs überschreitet. Der Schwellenwert kann dabei einen festen Wert beispielsweise oberhalb von 75% der maximalen Gaspedalrücknahmegeschwindigkeit (Vorgegeben durch die konstruktive Ausbildung des Bremspedals) aufweisen. Ist dies nicht der Fall, so wird dieser Schritt wiederholt. Andernfalls wird im Schritt 202 überprüft, ob ein Umsetzen des Fußes des Fahrers vom Gaspedal in Richtung auf das Bremspedal erfolgt. Dies kann beispielsweise mittels einer zwischen den beiden Pedalen angeordneten Lichtschranke oder einer anderen optischen Erfassungseinrichtung erfolgen. Erfolgt kein Umsetzen des Fußes des Fahrers, so wird zum Schritt 201 zurückgesprungen.

Andernfalls wird im Schritt 203 die erste Zeiterfassungseinrichtung T1 auf 0 zurückgesetzt und gestartet. Gemäß dem Schritt 204 wird in den Radbremsen ein solcher Bremsdruck erzeugt, daß die Bremsbeläge an den Bremsscheiben anliegen. Dadurch wird zwar lediglich eine unwesentliche Verzögerung des Fahrzeugs erreicht, jedoch ist durch das Überbrücken der Leerwege des Bremseinrichtung nachfolgend ein rascherer Bremsdruckaufbau gewährleistet. Im Schritt 205 wird dann überprüft, ob die Zeiterfassungseinrichtung T1 ein Überschreiten des ersten Zeitschwellenwertes T 1S festgestellt hat. Ist dies der Fall so wird gemäß dem Schritt 209 der Bremsdruck in den Radbremsen abgebaut und anschließend zum Schritt 201 zurückgesprungen.

Andernfalls wird gemäß dem Schritt 206 überprüft, ob die Betätigungsgeschwindigkeit vb des Bremspedals (als Gradient der die Betätigung des Bremspedals repräsentierenden Größe Bremspedalweg) den Anstiegsschwellenwert vbs überschreitet. Der Anstiegsschwellenwert ist ein vorgegebener Wert oder eine aus einem vorgegebenen ermittelte Größe, die in Abhängigkeit der Zeit T1 ermittelt wird. Bezüglich der Möglichkeiten, den Anstiegsschwellenwert in Abhängigkeit der der Bremspedalbetätigung vorangehenden Pedalbetätigungen bzw. ihrer zeitlichen Abfolge wird ausdrücklich auf die DE 44 13 172 C1, insbesondere auf die Beschreibung der Fig. 1 bis 3 verwiesen.

Ist der Anstiegsschwellenwert nicht überschritten, so wird zum Schritt 205 zurückgesprungen, andernfalls wird gemäß dem Schritt 207 der automatische Bremsvorgang fortgesetzt. Der automatische Bremsvorgang wird so fortgesetzt, daß in dem Bremskraftverstärker die maximale Druckdifferenz zwischen den Kammern erzeugt wird. Dabei ist der Bremsdruck in den Radbremsen durch ein Antiblockiersystem begrenzt.

In dem Schritt 208 wird überprüft, ob ein Abbruchkriterium für den automatischen Bremsvorgang erfüllt ist. Ein derartiges Abbruchkriterium ist beispielsweise eine Verringerung des Bremspedalweges oder ein Verringern der Betätigungskraft des Bremspedals durch den Fahrer. Es wird zum Schritt 207 zurückgesprungen solange das Abbruchkriterium nicht erfüllt ist. Andernfalls wird zum Schritt 209 gesprungen und Bremsdruck wird solange abgebaut, bis der Bremsdruck gleich dem Bremsdruck ist, der ohne den automatischen Bremsvorgang der Stellung des Bremspedals entspricht.

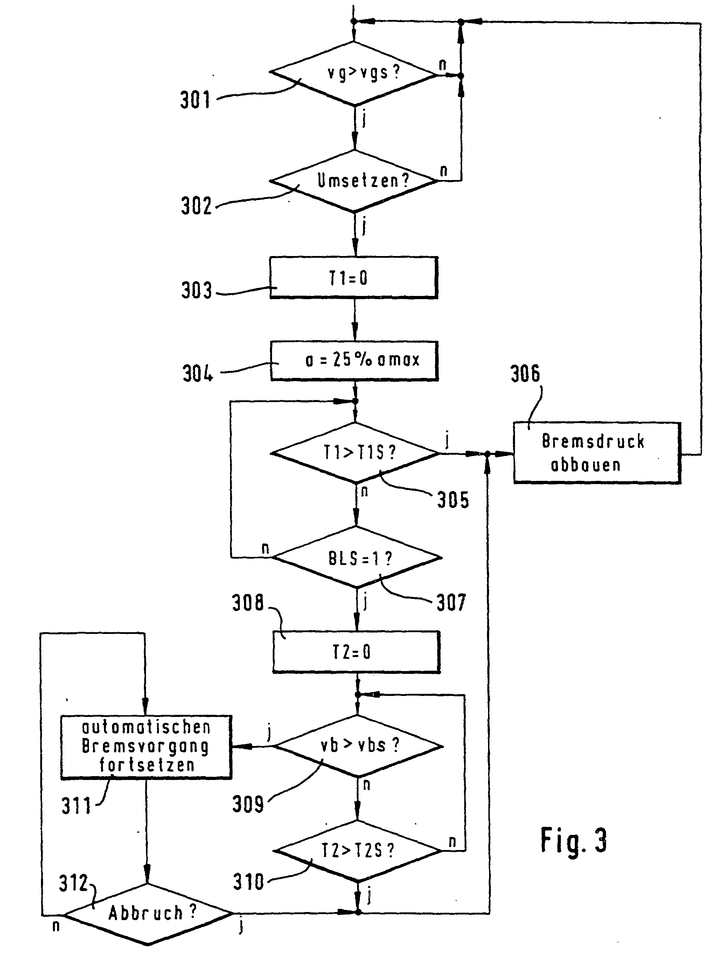

Die Fig. 3 zeigt das Flußdiagramm eines zweiten erfindungsgemäßen Verfahrens. Die Schritte 301 bis 303 dieses Verfahrens sind mit den Schritten 201 bis 203 des vorherigen Verfahrens identisch. Wird der Schritt 304 erreicht, so wird gemäß diesem Schritt in die Radbremsen ein Bremsdruck eingesteuert, der so geregelt ist, daß die Fahrzeugverzögerung a einen bestimmten Anteil, hier 25%, der maximalen Fahrzeugverzögerung amax erreicht. Unter maximaler Fahrzeugverzögerung kann dabei entweder die bei maximalem Kraftschluß zwischen Rad und Straße erzielbare Fahrzeugverzögerung oder aber die durch Schätzen des Kraftschlußbeiwertes ermittelbare aktuell erzielbare maximale Verzögerung des Fahrtzeugs verstanden werden. Der Anteil ist je nach Bezugsgröße zu bestimmen und liegt vorzugsweise in einem Intervall von 10% bis 40% der zugrundegelegten maximal erreichbaren Fahrzeugverzögerung. Durch diese Vorgehensweise wird das Fahrzeug spürbar abgebremst, es wird jedoch keine Bremsung vorgenommen, die von Anfang an so heftig ist, daß die Gefahr des Auffahrens für den nachfolgenden Autofahrer zu groß ist. Aus diesem Grund ist es vorteilhaft, wenn gleichzeitig die Bremsleuchten des Fahrzeugs in Betrieb genommen werden. Dieser Betrieb der Bremsleuchten kann sich dabei optisch erkennbar von der üblichen betriebsweise der Bremsleuchten unterscheiden.

Anschließend wird im Schritt 305 überprüft, ob die Zeit T1 den Zeitschwellenwert T1S überschritten hat. Ist dies der Fall, so wird zum Schritt 206 gesprungen und der Bremsdruck in den Radbremsen abgebaut, woran sich der Schritt 301 anschließt.

Andernfalls wird im Schritt 307 überprüft, ob der Schaltzustand des Bremslichtschalters BLS von seinem unbetätigten Schaltzustand in seinen betätigten Schaltzustand gewechselt hat. Ist dies nicht der Fall, so wird zum Schritt 305 zurückgesprungen. Andernfalls wird im Schritt 308 die Zeiterfassungseinrichtung T2 auf 0 zurückgesetzt und gestartet. Im Schritt 309 wird dann überprüft, ob die Betätigungsgeschwindigkeit vb des Bremspedals den Anstiegsschwellenwert vbs überschritten hat. Ist dies nicht der Fall, so wird der Schritt 310 überprüft, ob die zweite Zeit T2 den zweiten Zeitschwellenwert T2S überschritten hat. Ist dies gegeben, so wird zum Schritt 306 zurückgesprungen. Andernfalls wird zum Schritt 309 zurückgesprungen.

Wurde im Schritt 309 festgestellt, daß die Betätigungsgeschwindigkeit vb des Bremspedals den Anstiegsschwellenwert vbs überschritten hat, so wird im Schritt 311 der automatische Bremsvorgang fortgesetzt. Der automatische Bremsvorgang kann dabei so fortgesetzt werden daß wenigstens ein Teil, vorzugsweise alle, Räder des Fahrzeugs die Eingriffsschwelle des Antiblockiersystems erreichen. Dies stellt eine maximale Verzögerung des Fahrzeugs ab diesem Zeitpunkt sicher. Im darauffolgenden Schritt 312 wird dann geprüft, ob ein Abbruchkriterium (siehe Beschreibung Fig. 2 und Beschreibungseinleitung) erfüllt ist.

Ist dies nicht der Fall, so wird zum Schritt 311 zurückgesprungen. Andernfalls wird zum Schritt 306 übergegangen und der Bremsdruck auf den Bremsdruck reduziert, der der Stellung des Bremspedals entspricht.

Bei den erfindungsgemäßen Verfahren müssen die Zeitschwellenwerte T1S und T2S bestimmt werden. Diese können in Fahrversuchen ermittelt werden. Die Bestimmung des zweiten Zeitschwellenwertes T2S ist dabei von der Wahl des Anstiegsschwellenwertes und des ersten Zeitschwellenwertes abhängig. Der erste Zeitschwellenwert wird einen Wert zwischen 0,25 und maximal 1 Sekunde einnehmen. Der zweite Zeitschwellenwert T2S wird einen Wert ebenfalls innerhalb dieses Intervalls einnehmen. Dabei kann der zweite Zeitschwellenwert aber auch dadurch ermittelt werden, daß von seinem vorgegebenen Wert der Betrag der ersten Zeit T1 zum Zeitpunkt des Schaltens des Bremslichtschalters BLS abgezogen wird. Dann kann auch ein vorgegebener Wert bis ca. 1,5 Sekunden für den zweiten Zeitschwellenwert sinnvoll sein. Dies Zeitangaben sind jedoch lediglich eine Richtschnur. Die Abstimmung ist im einzelnen auch abhängig von den konstruktiven Gegebenheiten des Fahrzeugs.

Eine besonders günstige Ausgestaltung einer Bremsanlage zur Durchführung eines der vorgenannten Verfahren ist dann gegeben, wenn mit Beginn des automatischen Bremsvorgangs die hydraulische Verbindung zwischen Hauptbremszylinder und Radbremsen unterbrochen wird und das Bremspedal lediglich gegen die Kraft eines Pedalwegsimulators arbeitet. Der Bremsdruck an den Radbremsen wird dann durch eine Fremdkraftdruckquelle aufgebracht. In diesem Fall kann der Pedalweg des Bremspedals besonders einfach als Kriterium zur Weiterführung des automatischen Bremsvorgangs herangezogen werden, da keine Rückwirkung der Bremsdruckerzeugung auf das Bremspedal eintritt.

## Patentansprüche

1. Verfahren zur Durchführung eines automatischen Bremsvorgangs, wobei
- die Gaspedalrücknahmegeschwindigkeit (vg),
- das Vorhandensein eines Umsetzens des Fahrerfußes vom Gaspedal (1) in Richtung des Bremspedals (2)
erfaßt wird und daß dann, wenn die Gaspedalrücknahmegeschwindigkeit (vg) einen Schwellenwert (vgs) überschreitet und ein Umsetzen des Fahrerfußes festgestellt wird, ein automatischer Bremsvorgang ausgelöst wird,
- wobei während des automatischen Bremsvorgangs ein Bremsdruck in Radbremsen aufgebaut wird,
- wobei das Auslösen des automatischen Bremsvorgangs eine erste Zeiterfassung (T1) auslöst
**dadurch gekennzeichnet,**
**daß**
- eine die Betätigung des Bremspedals (12) repräsentierende Größe erfaßt wird,
- der Gradient (vb) der die Betätigung des Bremspedals repräsentierenden Größe ermittelt wird und daß
der automatische Bremsvorgang beendet wird, wenn nicht vor dem Überschreiten eines ersten Zeitgrenzwertes (T1S) durch die erste Zeiterfassung der Gradient (vb) der die Betätigung des Bremspedals repräsentierenden Größe einen Anstiegsschwellenwert (vbs) überschreitet.

2. Verfahren zur Durchführung eines automatischen Bremsvorgangs, wobei
- die Gaspedalrücknahmegeschwindigkeit (vg),
- das Vorhandensein eines Umsetzens des Fahrerfußes vom Gaspedal (1) in Richtung des Bremspedals (12)
erfaßt wird und daß dann, wenn die Gaspedalrücknahmegeschwindigkeit (vg) einen Schwellenwert (vgs) überschreitet und ein Umsetzen des Fahrerfußes festgestellt wird, ein automatischer Bremsvorgang ausgelöst wird,
- wobei während des automatischen Bremsvorgangs ein Bremsdruck in Radbremsen aufgebaut wird,
- wobei das Auslösen des automatischen Bremsvorgangs eine erste Zeiterfassung (T1) auslöst,
**dadurch gekennzeichnet,**
**daß**
- das Schalten des Bremslichtschalters (BLS, 11) aus der unbetätigten in die betätigte Schaltstellung (BLS=1) eine zweite Zeiterfassung (T2) auslöst,
- eine die Betätigung des Bremspedals repräsentierende Größe erfaßt wird,
- der Gradient (vbs) der die Betätigung des Bremspedals (12) repräsentierenden Größe ermittelt wird und daß
der automatische Bremsvorgang beendet wird, wenn entweder
- das Schalten des Bremslichtschalter (BLS, 11) nicht vor Überschreiten eines ersten Zeitgrenzwertes (T1S) durch die erste Zeiterfassung (T1) erfolgt, oder
- wenn nicht vor dem Überschreiten eines zweiten Zeitgrenzwertes (T2S) durch die zweite Zeiterfassung (T2) der Gradient (vb) der die Betätigung des Bremspedals repräsentierenden Größe einen Anstiegsschwellenwert (vbs) überschreitet.

3. Verfahren nach Anspruch 1 oder 2,
**dadurch gekennzeichnet,**
**daß** die die Betätigung des Bremspedals (12) repräsentierende Größe der Pedalweg oder die Betätigungsgeschwindigkeit des Bremspedals ist.

4. Verfahren nach einem der Ansprüche 1 bis 3,
**dadurch gekennzeichnet,**
**daß** die die Betätigung des Bremspedals (12) repräsentierende Größe die Betätigungskraft des Bremspedals ist.

5. Verfahren nach Anspruch 2,
**dadurch gekennzeichnet,**
**daß** der zweite Zeitgrenzwert (T2) in Abhängigkeit der zwischen dem Auslösen der ersten Zeiterfassung (T1) und dem Schalten des Bremslichtschalters (BLS=1) vergangenen Zeit bestimmt wird.

6. Verfahren nach einem der Ansprüche 1, 2 oder 5,
**dadurch gekennzeichnet,**
**daß** der Anstiegsschwellenwert (vbs) für den Gradienten der die Betätigung des Bremspedals repräsentierenden Größe in Abhängigkeit der zwischen dem Auslösen der ersten Zeiterfassung (T1) und dem Schalten des Bremslichtschalters (BLS=1) vergangenen Zeit bestimmt wird.

7. Verfahren nach Anspruch 1 oder 2,
**dadurch gekennzeichnet, ,**
**daß** nach dem Auslösen des automatischen Bremsvorgangs und vor dem Überschreiten des Anstiegsschwellenwertes (vbs) durch den Gradienten (vb) der die Betätigung des Bremspedals repräsentierenden Größe der erzeugte Bremsdruck auf einen Wert begrenzt ist, der dem Anlegen der Bremsbeläge an die Bremsscheibe entspricht.

8. Verfahren nach Anspruch 1 oder 2,
**dadurch gekennzeichnet**
**daß** der vor Betätigung des Bremspedals durch den Fahrer erzeugte Bremsdruck auf einen Wert unterhalb von 10 bar, insbesondere auf einen Wert zwischen 5 bar und 10 bar, begrenzt ist.

9. Verfahren nach Anspruch 1 oder 2,
**dadurch gekennzeichnet,**
**daß** nach dem Auslösen des automatischen Bremsvorgangs und vor dem Überschreiten des Anstiegsschwellenwertes (vbs) durch den Gradienten (vb) der die Betätigung des Bremspedals repräsentierenden Größe der Bremsdruck so geregelt ist, daß die erreichte Fahrzeugverzögerung (a) einen vorgegebenen Anteil der maximal erreichbaren Fahrzeugverzögerung (amax) nicht überschreitet.

10. Verfahren nach Anspruch 9,
**dadurch gekennzeichnet,**
**daß** der vorgegebene Anteil der maximal erreichbaren Fahrzeugverzögerung (amax) zwischen 10 und 40 Prozent liegt.

11. Verfahren nach Anspruch 1 oder 2,
**dadurch gekennzeichnet**
**daß** spätestens dann, wenn in den Radbremsen ein Bremsdruck erzeugt ist, der dem Anlegen der Bremsbeläge an die Bremsscheibe entspricht, die Radbremszylinder gegenüber den Hauptbremsleitungen abgesperrt werden, wobei in den Hauptbremsleitungen ein weiterer Druckanstieg möglich ist,
und wobei das Absperren der Hauptbremsleitungen gegenüber den Radbremsen mit Betätigung des Bremspedals durch den Fahrer festgestellt wird.

12. Verfahren nach einem der Ansprüche 1 bis 11,
**dadurch gekennzeichnet,**
**daß** der Bremsdruck in den Radbremsen während der Durchführung des automatischen Bremsvorgangs durch ein Antiblockiersystem begrenzt ist.

13. Verfahren nach einem der Ansprüche 1 oder 2 oder 7 bis 11
**dadurch gekennzeichnet,**
**daß** nach dem Überschreiten des Anstiegsschwellenwertes (vbs) durch den Gradienten (vb) der die Betätigung des Bremspedals repräsentierenden Größe ein Bremsdruck erzeugt wird, der größer ist als der Bremsdruck, der der Betätigung des Bremspedals (12) durch den Fahrer entspricht.

14. Verfahren nach Anspruch 13,
**dadurch gekennzeichnet,**
**daß** der nach dem Überschreiten des Anstiegsschwellenwertes (vbs) durch den Gradienten (vb) der die Betätigung des Bremspedals (12) repräsentierenden Größe erzeugte Bremsdruck so groß ist, daß an wenigstens einem Teil der Räder eine Regelung des Bremsdrucks durch das Antiblockiersystem erfolgt.

15. Verfahren nach Anspruch 7 oder 9
**dadurch gekennzeichnet,**
**daß** die die Betätigung des Bremspedals (12) repräsentierende Größe der Bremsdruck in einer der Hauptbremsleitungen ist.

16. Verfahren nach einem der Ansprüche 1 oder 2 oder 12 bis 14,
**dadurch gekennzeichnet,**
**daß** der Anstiegsschwellenwert (vbs) für den Gradienten (vb) der die Betätigung des Bremspedals repräsentierenden Größe in Abhängigkeit der Gaspedalrücknahmegeschwindigkeit (vg) bestimmt wird.

17. Verfahren nach Anspruch 1 oder 2,
**dadurch gekennzeichnet,**
**daß** die Bremsleuchten unabhängig von dem Schalten des Bremslichtschalters (11, BLS) durch das Auslösen des automatischen Bremsvorgangs in Betrieb genommen werden.

18. Verfahren nach Anspruch 17,
**dadurch gekennzeichnet,**
**daß** der Betrieb der Bremsleuchten sich zumindest in der Zeit, in der das Bremspedal (12) nicht vom Fahrer betätigt ist von dem Normalbetrieb der Bremsleuchten sichtbar unterscheidet.

19. Verfahren nach einem der vorstehenden Ansprüche,
**dadurch gekennzeichnet,**
**daß** nach dem Beenden des automatischen Bremsvorgangs durch Erfüllen eines Abbruchkriteriums oder nach dem Nichtübersteigen des Anstiegsschwellenwertes innerhalb des dafür vorgesehenen Zeitintervalls in den Radbremsen der Bremsdruck eingesteuert wird, der der Stellung des Bremspedals entspricht.

## Claims

1. Method of implementing automatic brake operation, in which
- the speed at which the accelerator pedal is released (vg),
- and whether or not the driver is moving his foot from the accelerator pedal (1) to the brake pedal (2)
are detected and if the release speed of the accelerator pedal (vg) exceeds a threshold value (vgs) and it is established that the driver is moving his foot, automatic brake operation is initiated,
- and a brake pressure is built up at the wheel brakes during automatic brake operation
- and initiation of automatic brake operation triggers detection of a first time (T1),
**characterised in that**
- a variable representing actuation of the brake pedal (12) is detected,
- the gradient (vb) of the variable representing actuation of the brake pedal is determined and
automatic brake operation is terminated if the first time detection unit detects that the gradient (vb) of the variable representing actuation of the brake pedal does not exceed a gradient threshold value (vbs) before a first time threshold value (T1S) is exceeded.

2. Method of implementing automatic brake operation in which
- the speed at which the accelerator pedal is released (vg),
- and whether or not the driver is moving his foot from the accelerator pedal (1) to the brake pedal (12)
are detected and if the release speed of the accelerator pedal (vg) exceeds a threshold value (vgs) and it is established that the driver is moving his foot, automatic brake operation is initiated,
- and a brake pressure is built up at the wheel brakes during automatic brake operation
- and initiation of automatic brake operation triggers detection of a first time (T1),
**characterised in that**
- switching of the stop light switch (BLS, 11) from the non-activated to the activated switch position (BLS=1) triggers detection of a second time (T2),
- a variable representing actuation of the brake pedal is detected,
- the gradient (vbs) of the variable representing actuation of the brake pedal (12) is determined and
automatic brake operation is terminated if either
- the stop light switch (BLS, 11) is not switched before a first time threshold value (T1S) detected by the first time detection unit (T1) or
- if the gradient (vb) of the variable representing actuation of the brake pedal has not exceeded a gradient threshold value (vbs) before a second time threshold value (T2S) detected by the second time detection unit (T2).

3. Method as claimed in claim 1 or 2,
**characterised in that**
the variable representing actuation of the brake pedal (12) is the pedal travel or the actuation speed of the brake pedal.

4. Method as claimed in one of claims 1 to 3,
**characterised in that**
the variable representing actuation of the brake pedal (12) is the actuation force of the brake pedal.

5. Method as claimed in claim 2,
**characterised in that**
the second time threshold value (T2) is determined depending on the time elapsed between triggering of the first time detection unit (T1) and switching of the stop light switch (BLS=1).

6. Method as claimed in one of claims 1, 2 or 5,
**characterised in that**
the gradient threshold value (vbs) for the gradient of the variable representing actuation of the brake pedal is determined depending on the time elapsed between triggering of the first time detection unit (T1) and switching of the stop light switch (BLS=1).

7. Method as claimed in claim 1 or 2,
**characterised in that**
after automatic brake operation has been initiated and before the gradient threshold value (vbs) has been exceeded by the gradient (vb) of the variable representing actuation of the brake pedal, the generated brake pressure is limited to a value corresponding to that of the brake linings in contact with the brake disc.

8. Method as claimed in claim 1 or 2,
**characterised in that**
the brake pressure generated before actuation of the brake pedal by the driver is limited to a value of less than 10 bar, in particular to a value of between 5 bar and 10 bar.

9. Method as claimed in claim 1 or 2,
**characterised in that**
after automatic brake operation has been initiated and before the gradient threshold value (vbs) has been exceeded by the gradient (vb) of the variable representing actuation of the brake pedal, the brake pressure is regulated so that the vehicle deceleration (a) obtained does not exceed is a pre-set proportion of the maximum achievable vehicle deceleration (amax).

10. Method as claimed in claim 9,
**characterised in that**
the pre-set proportion of the maximum achievable vehicle deceleration (amax) is between 10 and 40 per cent.

11. Method as claimed in claim 1 or 2,
**characterised in that**
the wheel brake cylinder is cut off from the main brake lines at the latest when a brake pressure at the wheel brakes corresponds to the brake linings in contact with the brake disc, so that a further increase in pressure is possible in the main brake lines,
and so that the driver will notice that the main brake lines have been cut off from the wheel brakes on actuating the brake pedal.

12. Method as claimed in one of claims 1 to 11,
**characterised in that**
the brake pressure at the wheel brakes is limited by an anti-blocking system during implementation of automatic brake operation.

13. Method as claimed in one of claims 1 or 2 or 7 to 11,
**characterised in that**
after the gradient (vb) of the variable representing actuation of the brake pedal has exceeded the gradient threshold (vbs), a brake pressure is generated which is higher than the brake pressure corresponding to actuation of the brake pedal (12) by the driver.

14. Method as claimed in claim 13,
**characterised in that**
the brake pressure generated after the gradient (vb) of the variable representing actuation of the brake pedal (12) has exceeded the gradient threshold (vbs) is so high that the brake pressure at some of the wheels is automatically controlled by the anti-blocking system.

15. Method as claimed in claim 7 or 9,
**characterised in that**
the variable representing actuation of the brake pedal (12) is the brake pressure in one of the main brake lines.

16. Method as claimed in one of claims 1 or 2 or 12 to 14,
**characterised in that**
the gradient threshold value (vbs) for the gradient (vb) of the variable representing actuation of the brake pedal is determined depending on the speed at which the accelerator pedal is released (vg).

17. Method as claimed in claim 1 or 2,
**characterised in that**
the brake lights are activated when automatic brake operation is activated irrespective of the switch state of the stop light switch (11, BLS).

18. Method as claimed in claim 17,
**characterised in that**
activation of the brake lights is visibly different from the normal operation of the brake lights at least during the time when the brake pedal (12) is not being actuated by the driver.

19. Method as claimed in one of the preceding claims,
**characterised in that**
after automatic brake operation has been terminated on satisfying a cut-off criterion or because the gradient threshold value has not been exceeded within the specifically set period, the brake pressure at the wheel brakes is adjusted so that it corresponds to that of the position of the brake pedal.

## Revendications

1. Procédé permettant de réaliser un freinage automatique, où
- la vitesse au moment où l'on relâche la pédale d'accélérateur (vg),
- la présence d'un déplacement du pied du conducteur, passant de la pédale d'accélérateur (1) en direction de la pédale de frein (2),
est détectée et que, lorsque la vitesse au moment où l'on relâche la pédale d'accélérateur (vg) dépasse la limite supérieure d'une valeur de seuil (vgs), et qu'un déplacement du pied du conducteur est constaté, un freinage automatique est déclenché,
- où, au cours du freinage automatique, une pression de freinage est formée dans les freins de roues,
- où le déclenchement du freinage automatique déclenche une première mesure de temps (T1),
**caractérisé**
- **en ce qu'**une variable représentant l'actionnement de la pédale de frein (12) est détectée,
- **en ce que** le gradient (vb) de la variable représentant l'actionnement de la pédale de frein est calculé, et
- **en ce que** le freinage automatique est achevé lorsque, avant le dépassement d'une première valeur limite de temps (T1S), par la première mesure de temps, le gradient (vb) de la variable représentant l'actionnement de la pédale de frein ne dépasse pas la limite supérieure d'une valeur de seuil d'augmentation (vbs).

2. Procédé permettant de réaliser un freinage automatique, où
- la vitesse au moment où l'on relâche la pédale d'accélérateur (vg),
- la présence d'un déplacement du pied du conducteur, passant de la pédale d'accélérateur (1) en direction de la pédale de frein (12),
est détectée et que, lorsque la vitesse au moment où l'on relâche la pédale d'accélérateur (vg) dépasse la limite supérieure d'une valeur de seuil (vgs), et qu'un déplacement du pied du conducteur est constaté, un freinage automatique est déclenché,
- où, au cours du freinage automatique, une pression de freinage est formée dans les freins de roues,
- où le déclenchement du freinage automatique déclenche une première mesure de temps (T1),
**caractérisé**
- **en ce que** le fonctionnement du contacteur des feux de stop (BLS, 11), passant de la position non actionnée à la position actionnée de fonctionnement (BLS = 1), déclenche une seconde mesure de temps (T2),
- **en ce qu'**une variable représentant l'actionnement de la pédale de frein est détectée,
- **en ce que** le gradient (vbs) de la variable représentant l'actionnement de la pédale de frein (12) est calculé, et
- **en ce que** le freinage automatique est achevé
-- soit lorsque le fonctionnement du contacteur des feux de stop (BLS, 11) ne se produit pas avant le dépassement d'une première valeur limite de temps (T1S), par la première mesure de temps (T1),
-- soit lorsque, avant le dépassement d'une seconde valeur limite de temps (T2S), par la seconde mesure de temps (T2), le gradient (vb) de la variable représentant l'actionnement de la pédale de frein ne dépasse pas la limite supérieure d'une valeur de seuil d'augmentation (vbs).

3. Procédé selon la revendication 1 ou 2, **caractérisé en ce que** la variable représentant l'actionnement de la pédale de frein (12) est la course de la pédale ou la vitesse d'actionnement de la pédale de frein.

4. Procédé selon l'une quelconque des revendications 1 à 3, **caractérisé en ce que** la variable représentant l'actionnement de la pédale de frein (12) est la force d'actionnement de la pédale de frein.

5. Procédé selon la revendication 2, **caractérisé en ce que** la seconde valeur limite de temps (T2) est déterminée en fonction du temps passé entre le déclenchement de la première mesure de temps (T1) et le fonctionnement du contacteur des feux de stop (BLS = 1).

6. Procédé selon l'une quelconque des revendications 1, 2 ou 5, **caractérisé en ce que** la valeur de seuil d'augmentation (vbs), pour le gradient de la variable représentant l'actionnement de la pédale de frein, est déterminée en fonction du temps passé entre le déclenchement de la première mesure de temps (T1) et le fonctionnement du contacteur des feux de stop (BLS = 1).

7. Procédé selon la revendication 1 ou 2, **caractérisé en ce que**, après le déclenchement du freinage automatique et avant le dépassement de la limite supérieure de la valeur de seuil d'augmentation (vbs), par le gradient (vb) de la variable représentant l'actionnement de la pédale de frein, la pression de freinage produite est limitée à une valeur qui correspond à l'application des garnitures de frein sur le disque de frein.

8. Procédé selon la revendication 1 ou 2, **caractérisé en ce que** la pression de freinage produite avant l'actionnement de la pédale de frein, par le conducteur, est limitée à une valeur inférieure à 10 bars, en particulier à une valeur comprise entre 5 bars et 10 bars.

9. Procédé selon la revendication 1 ou 2, **caractérisé en ce que**, après le déclenchement du freinage automatique et avant le dépassement de la limite supérieure de la valeur de seuil d'augmentation (vbs), par le gradient (vb) de la variable représentant l'actionnement de la pédale de frein, la pression de freinage est réglée de manière telle, que la décélération (a) du véhicule, ayant été atteinte, ne dépasse pas la limite supérieure d'une partie prédéfinie de la décélération (amax) du véhicule pouvant être obtenue au maximum.

10. Procédé selon la revendication 9, **caractérisé en ce que** la partie prédéfinie de la décélération (amax) du véhicule, pouvant être obtenue au maximum, est comprise entre 10 pour cent et 40 pour cent.

11. Procédé selon la revendication 1 ou 2, **caractérisé en ce que**, au plus tard lorsqu'une pression de freinage est produite dans les freins de roues, qui correspond à l'application des garnitures de frein sur le disque de frein, les cylindres des freins de roues sont fermés par rapport aux principaux circuits de freinage où, dans les principaux circuits de freinage, une autre augmentation de pression est possible, et où la fermeture des principaux circuits de freinage, par rapport aux freins de roues, est constatée avec l'actionnement de la pédale de frein effectué par le conducteur.

12. Procédé selon l'une quelconque des revendications 1 à 11, **caractérisé en ce que** la pression de freinage dans les freins de roues, pendant l'exécution du freinage automatique, est limitée par un système d'antiblocage.

13. Procédé selon l'une quelconque des revendications 1 ou 2 ou 7 à 11, **caractérisé en ce que**, après le dépassement de la limite supérieure de la valeur de seuil d'augmentation (vbs), par le gradient (vb) de la variable représentant l'actionnement de la pédale de frein, une pression de freinage est produite, qui est supérieure à la pression de freinage qui correspond à l'actionnement de la pédale de frein (12) effectué par le conducteur.

14. Procédé selon la revendication 13, **caractérisé en ce que** la pression de freinage produite après le dépassement de la limite supérieure de la valeur de seuil d'augmentation (vbs), par le gradient (vb) de la variable représentant l'actionnement de la pédale de frein (12), est si importante qu'il se produit, au moins au niveau d'une partie des roues, grâce au système d'antiblocage, un réglage de la pression de freinage.

15. Procédé selon la revendication 7 ou 9, **caractérisé en ce que** la variable représentant l'actionnement de la pédale de frein (12) est la pression de freinage dans l'un des principaux circuits de freinage.

16. Procédé selon l'une quelconque des revendications 1 ou 2, ou 12 à 14, **caractérisé en ce que** la valeur de seuil d'augmentation (vbs), pour le gradient (vb) de la variable représentant l'actionnement de la pédale de frein, est déterminée en fonction de la vitesse au moment où l'on relâche la pédale d'accélérateur (vg).

17. Procédé selon la revendication 1 ou 2, **caractérisé en ce que** les feux de stop peuvent fonctionner indépendamment du fonctionnement du contacteur des feux de stop (11, BLS) se produisant sous l'effet du déclenchement du freinage automatique.

18. Procédé selon la revendication 17, **caractérisé en ce que** le fonctionnement des feux de stop se différencie de façon évidente du fonctionnement normal des feux de stop, au moins pendant la période au cours de laquelle la pédale de frein (12) n'est pas actionnée par le conducteur.

19. Procédé selon l'une quelconque des revendications précédentes, **caractérisé en ce que**, après l'achèvement du freinage automatique, en satisfaisant un critère de réduction ou après le non-dépassement de la limite supérieure de la valeur de seuil d'augmentation à l'intérieur de l'intervalle de temps prévu à cet effet, la pression de freinage est régulée dans les freins de roues, laquelle pression de freinage correspond à la position de la pédale de frein.
